# DEMANDE DE BREVET EUROPEEN

(11) **EP 4 390 534 A1**
(43) Date de publication de la demande: **26.06.2024**
(21) Numéro de dépôt: 23219469.6
(22) Date de dépôt: 21.12.2023
(51) Int. Cl.: G03B 15/06, G03B 17/56

(54) **DISPOSITIF DE STUDIO VIDÉOGRAPHIQUE OU PHOTOGRAPHIQUE MINIATURISÉ ET PORTABLE**

(30) Priorité: 22.12.2022 FR 2214323
(71) Demandeur: Immersion Videomenu, 67000 Strasbourg (FR)
(72) Inventeur: GEYER-SANOUSSI, Hanane, 67200 STRASBOURG (FR)
(74) Mandataire: Cabinet Bleger-Rhein-Poupon

(57) **Abrégé**

L'invention concerne un dispositif de studio (1) vidéographique ou photographique miniaturisé et portable comportant une embase (2) reliée à une portion de dôme (3), par une liaison arrondie concave (4), ladite portion de dôme étant configurée pour permettre un accès (5) à l'intérieur de ladite portion de dôme (3) autorisant l'intervention sur un produit (P) disposé sur un plateau (6) que comporte l'embase.

Ledit plateau est entraîné en rotation par des moyens moteurs (7) localisés dans l'embase (2), cette dernière comportant au moins des moyens de solidarisation (21), de manière réversible, d'un bras support (8) qui comporte des moyens de solidarisation complémentaires (82), ledit bras comportant par ailleurs un logement (87) pour recevoir un dispositif connecté de prise de vues.

Le dispositif de l'invention trouvera une application particulièrement intéressante dans le domaine de la vidéographie culinaire.

## Description

La présente invention est relative à un dispositif de studio vidéographique ou photographique, notamment de photographies 3D, portable et miniaturisé, préférentiellement connecté et permettant un montage ainsi qu'un partage instantané de vidéos à 360°, de produits divers.

Le dispositif de studio, miniaturisé, conforme à la présente invention trouvera son application, principalement, mais non limitativement, dans le domaine de la vidéographie et de la création de contenu culinaire.

Traditionnellement, lorsqu'un professionnel ou un commerçant, de la restauration ou de tout autre domaine, souhaite effectuer des vidéographies et/ou des photographies de ses produits, d'excellente qualité afin de mettre en valeur visuellement lesdits produits et de les présenter de la manière la plus esthétique possible aux consommateurs, celui-ci doit faire appel à un vidéographe ou à un photographe professionnel.

Or, nécessairement, le travail d'un professionnel, la mise en place d'un studio éphémère ou bien l'installation de boxes en tissus disponibles dans le commerce et permettant de créer un fond uni nécessaire à la valorisation visuelle des produits, de même que l'installation de l'éclairage adéquat, étudié spécifiquement pour la photographie ou la vidéographie culinaire notamment, le temps de traitement, montage et stockage des vidéos par un professionnel, etc., constituent autant d'étapes qui sont chronophages et particulièrement coûteuses, et qu'il convient de répéter autant de fois que nécessaire selon le nombre de produits dont il faut réaliser la présentation.

Or, dans le domaine de la restauration ou de l'hôtellerie, il est fréquent que les menus ou les plats proposés aux clients changent chaque mois, voire même d'une semaine à l'autre.

A noter également que, de manière spécifique au domaine culinaire, la transparence alimentaire devient un enjeu crucial pour les professionnels du secteur, notamment les restaurateurs, traiteurs, et hôteliers, qui cherchent de plus en plus à décrire les plats qu'ils proposent de la manière la plus réaliste et la plus exhaustive possible, à la fois visuellement et techniquement, pour une information complète et précise à destination du consommateur final.

Ainsi, pour l'obtention et le partage d'une telle description complète d'un plat, tant dans son aspect visuel final que dans les étapes de sa réalisation technique, il conviendrait de pouvoir proposer au consommateur, des vidéos qui permettraient de suivre la réalisation et le dressage du plat, étape par étape, jusqu'à l'obtention du résultat final.

Cela étant, outre les inconvénients liés à l'intervention d'un professionnel de la prise de vidéos ou de photographies, mentionnés précédemment, il n'existe pas, dans l'état de la technique, de dispositif spécialement conçu pour permettre la réalisation, et éventuellement le montage automatique et instantané, de prises de vue, notamment des vidéos de qualité professionnelle de plats tournant à 360°, pendant toute la durée du dressage d'un repas par un cuisinier.

On connaît également, du document de brevet américain US 2016/156829 un système de capture d'images comprenant un support horizontal avec un plateau tournant surmonté par un demi-dôme, un objet pouvant être positionné sur le plateau.

Le demi-dôme, qui recouvre la moitié du support horizontal et de l'objet, est repliable et déployable,
Cela étant, lorsque le demi-dôme est déployé, l'accès au produit ou à l'objet positionné sur le support horizontal n'est pas possible.

En outre, au moyen des dispositifs existants, il est difficile d'obtenir des prises de vues sans la démarcation entre la paroi de fond du dispositif et le support horizontal de réception de l'objet à photographier ou à prendre en vidéographie, qui forment l'une avec l'autre une liaison à angle droit.

La présente invention se veut à même de remédier, au moins en partie, aux inconvénients des propositions actuelles, en proposant un dispositif de studio vidéographique et accessoirement photographique, miniaturisé et portable, permettant une rotation motorisée à 360° du produit à présenter, afin qu'il soit visible dans son intégralité et avec une qualité optimale des prises de vues, sans démarcations sur celles-ci dues aux éléments du support, ledit dispositif étant par ailleurs conçu pour permettre un accès facilité au produit, et un travail sur ce dernier, lorsque celui-ci est mis en rotation.

A cet effet, l'invention concerne, plus particulièrement, un dispositif de studio vidéographique ou photographique miniaturisé et portable caractérisé en ce qu'il comporte une embase support, horizontale ou sensiblement horizontale, reliée à une portion de dôme par une liaison arrondie concave, ladite portion de dôme étant configurée pour permettre un accès à l'intérieur de ladite portion de dôme pour autoriser l'intervention sur un produit disposé, directement ou indirectement, sur un plateau tournant que comporte l'embase support.

Ledit plateau est entraîné en rotation par des moyens moteurs localisés dans l'embase, et cette dernière comporte, également, au moins des moyens de solidarisation, de manière réversible, d'un bras support à ladite embase, ledit bras support étant muni, au niveau d'une première extrémité, de moyens de solidarisation complémentaires auxdits moyens de solidarisation que comporte ladite embase, ledit bras support comportant par ailleurs, au niveau de son extrémité opposée à ladite première extrémité munie desdits moyens de solidarisation, un logement pour recevoir un dispositif de prise de vues ou bien, directement, un dispositif de prise de vues intégré au bras support.

Selon des modes particuliers de réalisation :
- le dispositif de studio vidéographique ou photographique miniaturisé et portable est connecté, ledit dispositif de prise de vue étant intégré au bras support et comportant une caméra connectée (ou bien un smartphone, une tablette, un appareil photographique...), associée à des moyens de contrôle et/ou de commande de celle-ci, comprenant un écran de contrôle pour le déclenchement de la prise de vues, ainsi que des moyens de type application web permettant un montage automatique et un partage instantané, des vidéos, préférentiellement via tout réseau wifi ou Bluetooth (marque déposée) accessible, vers une plateforme, un site web, une adresse mail, un réseau social ou toute autre plateforme numérique de réception de données numériques ;
- ladite portion de dôme comporte des échancrures latérales en sorte de permettre un accès latéral audit produit ;
- lesdits moyens moteurs sont associés à des moyens de commande et de limitation de la vitesse de rotation dudit plateau tournant, à une vitesse de rotation comprise entre 3 et 4 tr/min, de préférence égale à 3 tr/min ;
- le dispositif de studio miniaturisé comporte encore, au moins, deux sources lumineuses ;
- lesdites sources lumineuses sont positionnées au niveau de la paroi interne de la portion de dôme ;
- lesdites sources lumineuses présentent chacune une température comprise entre 4300 K et 4800 K;
- la première extrémité du bras support consiste en un embout de connexion de forme complémentaire à au moins une encoche que comporte l'embase support, ledit embout de connexion étant muni de moyens magnétiques, sous la forme d'aimants, attirant magnétiquement des moyens magnétiques complémentaires que comporte l'embase support, sous la forme d'aimants ou sous la forme d'un élément métallique ;
- ledit bras support comporte des moyens de réglages du positionnement du dispositif de prise de vues et/ou des moyens de passage dudit dispositif de prise de vues entre au moins une première position et au moins une deuxième position.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :

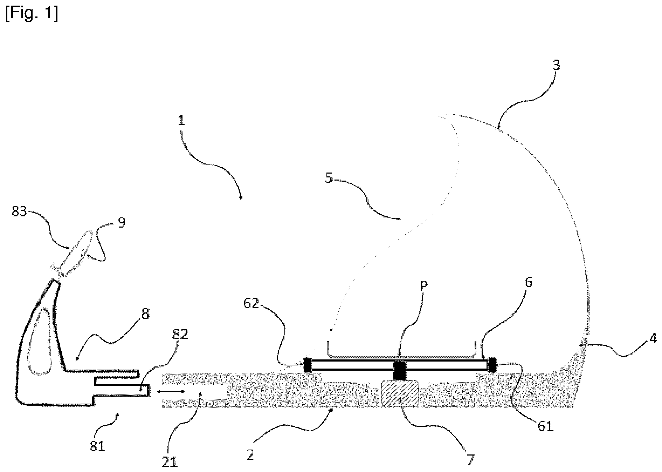

[Fig.1] représente une vue schématisée et en coupe d'un premier mode de réalisation d'un dispositif de studio vidéographique ou photographique miniature conforme à l'invention, comportant une embase horizontale reliée à une portion de dôme par une liaison arrondie concave, ladite embase comportant des moyens de solidarisation, par clipsage, d'un bras support d'un dispositif de prise de vues, ainsi qu'un plateau, entraîné en rotation par des moyens moteurs, sur lequel plateau peut être disposé un produit à valoriser .

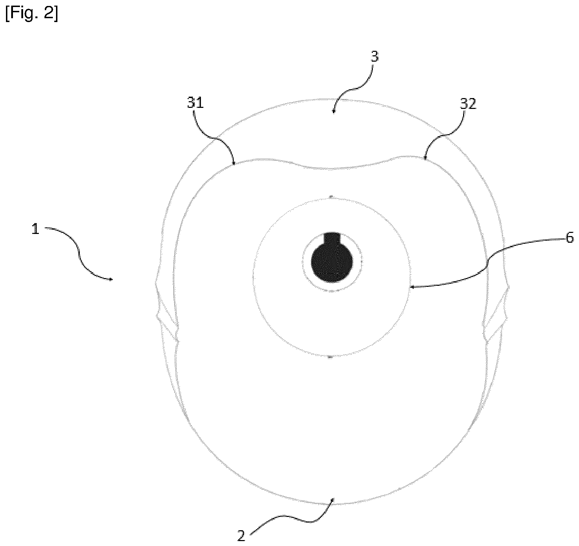

[Fig.2] représente une vue schématisée et de dessus d'un mode de réalisation d'une partie du dispositif conforme à l'invention, à savoir l'embase horizontale surmontée d'une portion de dôme, sans le bras support du dispositif de prise de vues.

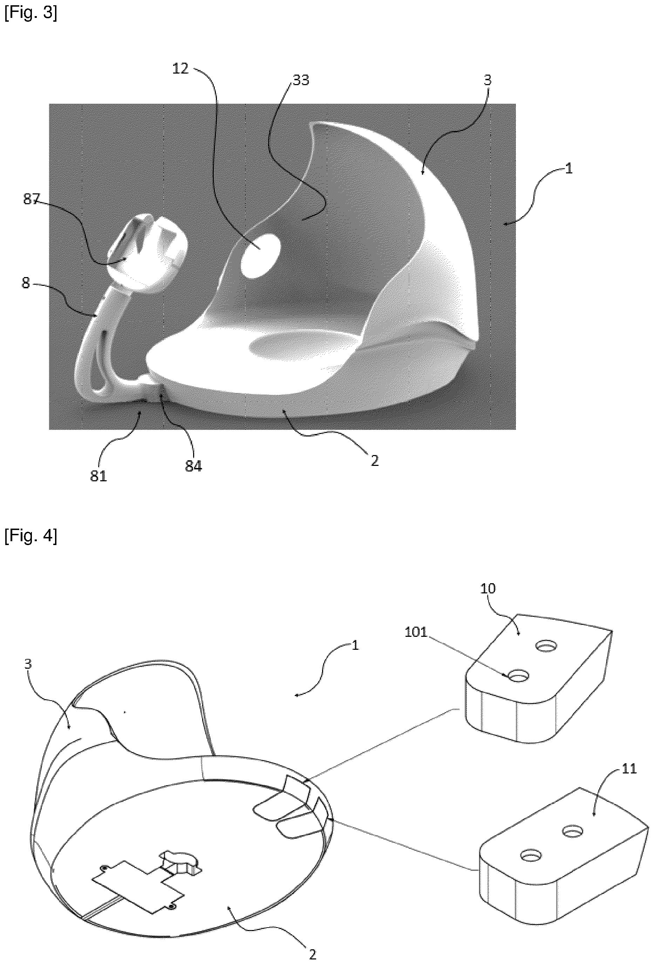

[Fig.3] illustre une vue schématisée et en perspective d'un second mode de réalisation du dispositif de studio vidéographique ou photographique miniature conforme à l'invention, dans lequel la solidarisation du bras support du dispositif de prise de vues à l'embase horizontale est réalisée soit par des moyens magnétiques de type aimants soit par clipsage, ledit dispositif incorporant par ailleurs, au niveau de la paroi interne de la portion de dôme, au moins deux sources lumineuses, dont l'une est visible sur la figure.
[Fig.4] illustre une vue schématisée et de dessous d'une variante de réalisation du second mode de réalisation du dispositif de studio conforme à la figure 3, comportant deux emplacements, sous la forme de deux encoches, au niveau de l'embase horizontale, destinés à la solidarisation du bras support du dispositif de prise de vues à ladite embase, les encoches étant ici refermées au moyen de cales.

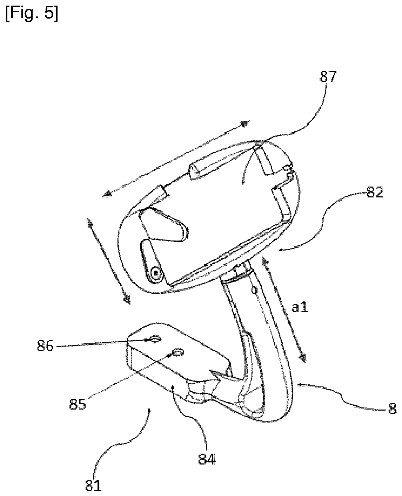

[Fig.5] illustre une vue schématisée et en perspective d'un mode de réalisation particulier d'une partie du dispositif de studio miniaturisé de l'invention, à savoir le bras support du dispositif de prise de vue, ledit bras étant équipé de moyens aimantés pour la solidarisation dudit bras à l'embase support et d'un logement réglable pour la réception d'un dispositif de prise de vues.

En référence aux figures des dessins ci-joints, la présente invention concerne un dispositif 1 de studio vidéographique et/ou photographique miniaturisé, et de préférence connecté présentant, de ce fait l'avantage d'être portable, léger, et peu encombrant, et, par conséquent, aisément transportable d'un endroit à un autre. Le dispositif 1 de l'invention permet ainsi de répondre à l'ensemble des besoins essentiels pour la réalisation de prises de vue d'une qualité professionnelle.

Ce dispositif de studio 1 est destiné à la prise de vues à 360°, en particulier la prise de vidéos et accessoirement de photographies, d'un produit P destiné à être mis en valeur en vue d'une communication à l'attention de consommateurs, d'une commercialisation, de la réalisation d'un contenu pédagogique ou d'une image photogrammétrique dudit produit P, ou pour tout autre motif.

Ce dispositif de studio 1 miniature comporte, d'une part, une embase support 2, qui se présente de manière horizontale, ou sensiblement horizontale, et ayant une forme de préférence arrondie ou sensiblement arrondie, voire ovale, comme cela est illustré sur les figures jointes.

D'autre part, ledit dispositif de studio 1 comprend une portion de dôme 3, ou une portion de sphère, surmontant en partie seulement ladite embase support 2, ladite portion de dôme 3 étant dans la continuité de ladite embase support 2 à laquelle elle est reliée au moyen d'une liaison arrondie concave 4, cette liaison étant notamment visible sur l'illustration en coupe de la figure 1 des dessins ci-joints.

La présence de cette liaison arrondie concave 4 entre l'embase support 2 qui est sensiblement horizontale ou horizontale, et la portion de dôme 3, permet la création d'un « cyclorama », consistant plus spécifiquement en une paroi de fond ou en un mur ayant une surface courbe, permettant de supprimer toute démarcation entre l'embase support 2 et la paroi de dôme 3 qui la surmonte en partie et donc de constituer un arrière-plan continu particulièrement intéressant pour la réalisation de prises de vues.

Ainsi, le produit P est présenté de manière optimale pour la prise de vues ou l'enregistrement d'une vidéo de celui-ci.

En outre, la présence, dans le dispositif de l'invention, de cette liaison arrondie concave 4 entre l'embase support 2 et la portion de dôme 3 permet une circulation optimale de la lumière au sein dudit dispositif 1. Ainsi, le rendu LUX, ou rendu lumineux, grâce à cette caractéristique, est proche de 95% de l'éclairage dans l'ensemble du dispositif 1.

A noter également que, selon une caractéristique particulière au dispositif de studio 1 de l'invention, la portion de dôme 3 est configurée pour permettre un accès 5 à l'intérieur de celle-ci, notamment pour autoriser une intervention sur ledit produit P qui est disposé au sein du dispositif de studio 1, pour lequel une vidéo est en train d'être enregistrée, ou lorsque celui-ci est en train d'être photographié.

Ledit produit P est plus préférentiellement disposé, directement ou indirectement, sur un plateau tournant 6 positionné au niveau de l'embase support 2, ledit plateau 6 étant apte à être entraîné en rotation par des moyens moteurs 7 qui sont également contenus dans ladite embase 2 du dispositif 1.

De manière avantageuse, lesdits moyens moteurs 7 sont associés à des moyens de commande et de limitation de la vitesse de rotation dudit plateau tournant 6, en sorte que la vitesse de rotation de ce dernier soit comprise entre 3 et 4 tr/min.

Tout préférentiellement, la vitesse de rotation du plateau 6 est maintenue à une vitesse égale à 3 tr/min pendant l'enregistrement d'une vidéo portant sur le produit P.

A noter que le plateau rotatif 6 peut être complété par une pluralité de roulettes ou de galets 61, 62.

Ainsi, la portion de dôme 3 est configurée de telle sorte à ce que l'on puisse atteindre le produit P déposé sur le plateau rotatif 6 que comporte l'embase 2, notamment en venant par le dessus de celui-ci.

En d'autres termes, et comme cela est illustré sur les figures jointes, notamment sur la figure 2, la portion de dôme 3 ne surmonte que partiellement la surface de l'embase support horizontale 2, en ne recouvrant notamment pas la surface de ladite embase 2 sur laquelle repose le plateau rotatif 2.

A noter également que, selon une particularité avantageuse de l'invention, ladite portion de dôme 3 du dispositif de studio miniature 1 de l'invention comporte également des échancrures latérales 31, 32 en sorte d'autoriser, en plus d'un accès en partie supérieure, un accès latéral au produit P à valoriser, positionné au niveau de l'embase support 2 sur le plateau rotatif 6.

Tout préférentiellement, ladite embase support 2 du dispositif 1 comporte, également, des moyens de solidarisation 21, pour la réalisation d'une liaison avantageusement réversible de ladite embase 2 avec un bras support 8, ce dernier étant par ailleurs muni avantageusement d'un logement 87 pour la réception et le maintien d'un dispositif de prise de vues comme illustré sur les figures 3 et 5, sur lesquelles le dispositif de prise de vues en question n'est pas représenté.

A noter que ledit bras support 8 fait partie du dispositif 1, de même que le logement 87 pour la réception et le maintien d'un dispositif de prise de vues.

A noter également que, lorsque ledit bras support 8 est muni d'un tel logement 87, le dispositif 1 de studio miniature 1 de l'invention peut ne pas incorporer de dispositif de prise de vues, ce dernier étant alors indépendant dudit dispositif 1 et positionné ultérieurement par l'utilisateur.

Ledit dispositif de prise de vues est préférentiellement associé à des moyens de commande de celui-ci, comprenant un écran de contrôle, pour le déclenchement de la prise de vues, vidéos préférentiellement ou photo, enclencher la rotation du plateau 6 et éventuellement un mouvement du bras support 8, ainsi que des moyens de type application web permettant un montage automatique et un partage, de préférence instantané, des vidéos ou des photographies.

Le logement 87 pour la réception et le maintien d'un dispositif de prise de vues peut comporter une ouverture pour le passage d'un dispositif de rechargement du dispositif de prise de vues, cette ouverture étant illustrée sur la figure 5.

Le dispositif de prise de vue, qui peut consister, par exemple, en un terminal de commande associé à un smartphone spécifique, une caméra connectée, une tablette, ou tout autre moyen, est apte à enregistrer des vidéographies et d'effectuer un montage automatique et instantané, desdites vidéographies du produit P mis en rotation sur le plateau tournant 6 positionné sur l'embase support 2, et de partager le contenu réalisé, via tout réseau wifi ou Bluetooth accessible.

A noter que, en référence à la figure 1 sur laquelle un dispositif de prise de vue 9 est schématiquement représenté, on comprend qu'un tel dispositif 9 peut également faire partie intégrante du dispositif 1 de l'invention, le bras support 8 destiné à être solidarisé à l'embase support 2 étant alors conçu de manière à comporter un terminal de contrôle/commande connecté et intelligent (grâce à l'application embarquée dédiée), muni d'une caméra vidéo et/ou d'un appareil photo.

A cet effet de solidarisation entre les deux éléments, bras 8 et embase 2, ledit bras support 8 est muni, au niveau d'une première extrémité 81, de moyens de solidarisation 82 qui sont complémentaires aux moyens de solidarisation 21 que comprend l'embase support 2.

Les moyens de solidarisation 21 de l'embase support 2 et les moyens de solidarisation complémentaires 82 que comporte le bras support 8 peuvent consister en tous types de moyens connus de l'homme du métier et permettant, de préférence, une solidarisation réversible de l'embase 2 au bras support 8.

Sur la figure 1 des dessins ci-joints, est illustré un premier mode de réalisation de cette solidarisation réversible entre l'embase support 2 et le bras support 8 du dispositif de prise de vue. Ici, la liaison entre ces deux éléments 2, 8 est réalisée par clipsage, emboîtement ou encliquetage de l'extrémité 82 du bras support 8 pouvant se présenter sous la forme d'un doigt venant s'engager dans une cavité dont est munie ladite embase support 2.

Les figures 3, 4 et 5 illustrent, quant à elles, un deuxième mode de réalisation de cette liaison réversible, particulièrement avantageux, dans lequel la première extrémité 81 du bras support 8 du dispositif de prise de vues 9 consiste en un embout de connexion 84 de forme complémentaire à au moins une encoche 22 que comporte l'embase support 2 du dispositif de studio miniature 1 de l'invention.

Dans ce mode de réalisation, ledit embout de connexion 84 est avantageusement muni de moyens magnétiques 85, 86, préférentiellement sous la forme d'aimants 85, 86, attirant magnétiquement des moyens magnétiques complémentaires que comporte l'embase support 2, également de préférence sous la forme d'aimants ou bien encore sous la forme d'un élément métallique, non visible(s) sur les figures.

Avantageusement, et comme illustré plus particulièrement sur la figure 4, ladite embase support 2 comporte au moins deux encoches, voire un nombre supérieur à deux encoches, en sorte de proposer au moins deux positions différentes pour la solidarisation du bras support 8 à l'embase support 2. Par conséquent, le dispositif de prise de vues dont est muni le bras support 8, préférentiellement au travers du logement 87 que comporte à cet effet ledit bras 8, peut passer aisément de l'une à l'autre de ces positions.

Ainsi, les deux encoches que comporte préférentiellement l'embase support 2 du dispositif 1 constituent des moyens de passage du bras support 8, et par conséquent dudit dispositif de prise de vues 9, entre une première position et une deuxième position.

A noter que, sur la figure 4, sont représentées deux cales 10, 11 magnétiques au moyen d'aimants 101, lesdites cales 10, 11 étant destinées à venir combler les deux encoches de l'embase support 2 du dispositif 1 de studio miniaturisé de l'invention, lorsque l'embout de connexion 84 du bras support 8 du dispositif de prise de vues 9 n'est pas positionné dans l'une de ces deux encoches.

Le bras support 8 du dispositif 1 de l'invention présente avantageusement un arrondi avec surélévation, en sorte qu'il ne touche jamais le plan sur lequel peut être posé le dispositif 1. Il est ainsi réalisé avec un soutien arrondi pour valider la stabilité du bras 8 et sa résistance à des chocs lors de la manipulation.

Comme déjà évoqué ci-dessus, le dispositif de prise de vues 9 peut consister en un terminal connecté doté d'une caméra de prise de vue 4K, ou d'un smartphone ou tout autre moyen (tablette, appareil vidéographique, caméra connectée...) apte à permettre d'enregistrer des vidéos du produit P lorsque celui-ci est disposé sur le plateau tournant 6 entraîné en rotation par les moyens moteurs 7.

Le dispositif de prise de vues 9 peut permettre de réaliser le montage automatique et instantané des vidéos réalisées, et d'envoyer lesdites vidéos moyennant tout réseau wifi ou Bluetooth (marque déposée) accessible, vers une plateforme, un site web, une adresse mail, un réseau social ou toute autre plateforme numérique de réception de données numériques.

Ainsi, un tel dispositif de prise de vues 9 est positionné dans le logement 87 que comporte avantageusement le bras support 8 au niveau de son extrémité 82 opposée à sa première extrémité 81 qui coopère avec l'embase support 2.

Les dimensions intérieures du logement 87 en question peuvent donc préférentiellement être ajustables aussi bien en largeur, en longueur qu'en profondeur, afin de recevoir différents modèles de dispositifs de prise de vues aux dimensions variables.

En outre, le positionnement du logement 87 peut être, de manière avantageuse, adapté en hauteur selon un axe de mouvement vertical a1 et en inclinaison selon deux axes de mouvement rotatif a2 et a3, ces axes de mouvement a1, a2 et a3 étant représentés par les doubles flèches de la figure 5.

Avantageusement, le positionnement du logement 87 porté par le bras support 8, donc le positionnement du dispositif de prise de vues 9, peut être contrôlé par les moyens de contrôle et de commande auxquels ledit dispositif 9 est associé, lesdits moyens de contrôle et de commande faisant partie intégrante du dispositif 1 de l'invention.

Selon une caractéristique particulièrement avantageuse du dispositif 1 de studio vidéographique ou photographique de l'invention, celui-ci comporte également au moins deux sources lumineuses, dont l'une d'elle, référencée 12 et est illustrée sur la figure 3.

Lesdites sources lumineuses 12 sont préférentiellement intégrées à la portion de dôme 3, en étant positionnées au niveau de la paroi intérieure 33 de ladite portion de dôme 3 dudit dispositif 1.

Tout préférentiellement, lesdites sources lumineuse 12 qui sont intégrées au dispositif de studio miniature 1 de l'invention présentent une température comprise entre 4300 K et 4800 K.

Une telle température pour les sources lumineuses est en effet particulièrement avantageuse car elle permet de cibler à la fois les couleurs chaudes et froides du produit P qui doit être mis en valeur au moyen du studio miniature 1 de l'invention, notamment lorsque celui-ci consiste en un produit culinaire. En outre, les sources de lumière étanchéisée et utilisant des modules de projection LED, permettent également d'éviter une surchauffe qui peut être induite par les sources de lumière halogène ou incandescente qui peuvent être utilisées par les professionnels de la vidéographie.

La mise en tension de l'éclairage est avantageusement pilotée par les moyens de contrôle et de commande qui sont associés au dispositif de prise de vues 9 qui est préférentiellement intégré au dispositif 1 de studio miniature de l'invention.

Il est avantageux qu'une première source lumineuse soit placée en sorte que le faisceau lumineux soit orienté selon un angle de 15° vers l'extérieur de la portion de dôme 3, tandis qu'une deuxième source lumineuse est placée en sorte que son faisceau lumineux soit orienté selon un angle de 15° également, vers l'intérieur cette fois-ci, de ladite portion de dôme 3, les deux faisceaux lumineux pointant en direction du centre du plateau rotatif 6 au niveau duquel est positionné le produit P.

Ainsi, on crée un éclairage indirect par diffusion en sorte d'éviter la génération d'ombres et de points de surexposition tout en permettant une mise en valeur optimale du volume du produit P en particulier lorsque celui-ci consiste en un produit culinaire.

En effet, pour mémoire, le présent dispositif 1 de studio vidéographique, miniaturisé, selon l'invention, trouvera une application particulièrement intéressante dans le domaine de la vidéographie culinaire mais aussi de la photographie culinaire ou d'artisanat.

En particulier, les caractéristiques et la conception spécifique dudit dispositif 1, et notamment la présence du plateau rotatif 7 au centre ou sensiblement au centre de l'embase support 2, de même que la configuration de la portion de dôme 3 conçue pour permettre un accès 5 à l'intérieur de cette portion de dôme et donc une intervention sur le produit P, en l'occurrence un plat P, disposé via un support (assiette, plat, bol...) sur le plateau tournant 7 qui est mis en rotation à une vitesse contrôlée, vont permettre à un chef cuisinier d'effectuer le dressage du plat pendant que le dispositif de prise de vues 9 dont est muni le bras support 8 enregistre une vidéo, ou bien prend des photographies à intervalles de temps réguliers.

Le dressage du plat peut ainsi être effectué confortablement et en toute sécurité pendant l'enregistrement, l'utilisateur pouvant accéder aisément au plat disposé sur le plateau rotatif 6, et en évitant toute gêne visuelle qui serait susceptible d'être occasionnée par une rotation trop rapide dudit plateau rotatif 7, la vitesse de rotation de celui-ci étant limitée, pour mémoire à une vitesse inférieure située entre 3 et 4 tr/min.

A noter que l'embase support 2 et la portion de dôme 3 reliées entre elles par la liaison arrondie concave 4 sont avantageusement fabriquées d'un seul tenant à partir d'un composant plastique, type PETG (polyéthylène téréphtalate glycol) ou PLA (acide polylactique), qui confère un aspect naturellement mat au dispositif de studio miniature 1 de l'invention.

Plusieurs aspects visuels, notamment lisse, rugueux, imprimé, etc., peuvent avantageusement être obtenus au moyen de ces matières plastiques de base.

Le dispositif 1 de studio miniature, dans son application dans la réalisation de vidéos culinaires, est particulièrement intéressant en ce qu'il permet aux consommateurs une visualisation de vidéos réelles, sans filtres, de chacun des plats proposés par un établissement de restauration.

Les plats effectuant une rotation à 360° lors de la réalisation de leur dressage grâce aux caractéristiques du dispositif 1 de l'invention, il est envisageable de connaître avec précision ce qu'ils contiennent.

La rotation du plateau tournant 6 du dispositif 1 à une vitesse précise, limitée, et maintenue constante, permet à un professionnel de la restauration de dresser en toute sécurité pendant l'enregistrement simultané d'une vidéo, sans aucune gêne visuelle.

En outre, de manière avantageuse, la présence et le positionnement de sources lumineuses 12 telles que décrites ci-dessus permettent d'éviter la génération d'ombres et de points de surexposition susceptibles de dénaturer une vidéo culinaire, tandis que les températures des sources lumineuses sélectionnées permettent un rendu optimal des couleurs chaudes et froides que peuvent présenter différents aliments mis en association, sans les dénaturer.

La conception du dispositif 1, aussi bien en ce qui concerne l'emplacement du dispositif de prise de vues (caméra) porté par un bras support 8, que l'association d'une embase support 2 horizontale et d'une portion de dôme 3 via une liaison arrondie, en sorte de laisser la possibilité d'une intervention sur le produit positionné sensiblement au centre de l'embase sur un plateau rotatif 6, permet au professionnel de travailler son produit sans être gêné par la présence d'un obstacle entre ses mouvements et le plateau 6, tout en évitant par ailleurs la génération d'ombres du fait d'obstacles entre les sources lumineuses 12 et le produit.

A noter encore que, préférentiellement, le dispositif de prise de vue connecté, spécifique, est fourni avec le dispositif de studio 1 vidéographique connecté miniaturisé et portable de l'invention, adapté pour être positionné dans le logement 87 que comporte le bras support 8.

Également, le déclenchement des moyens moteurs 7 pour l'entrainement en rotation du plateau 6 à une vitesse limitée et contrôlée, l'allumage des sources lumineuses 12, ainsi que le déclenchement du dispositif de prise de vues et le mouvement du bras support 8 de ce dernier, peuvent être commandés par des moyens de contrôle/commande embarqués comprenant notamment un algorithme développé à cet effet et une intelligence artificielle pour une réalisation et un traitement instantanés de vidéos portant sur le produit P.

Dans le cadre de l'application préférentielle de la réalisation de vidéos culinaires, les images générées au moyen du dispositif de prise de vues peuvent ainsi être complétées d'un descriptif, comportant notamment une liste des ingrédients entrant dans la composition du plat constituant le produit P, dont l'intelligence artificielle embarquée reconnaît les allergènes éventuellement présents.

Les vidéos ainsi générées peuvent être ensuite partagées facilement, via une application de gestion, un menu en ligne, ou sur des réseaux de communication, type réseaux sociaux, selon les préférences de l'utilisateur du dispositif 1 de l'invention.

## Revendications

1. Dispositif de studio (1) vidéographique ou photographique miniaturisé et portable **caractérisé en ce qu'**il comporte une embase support (2) horizontale ou sensiblement horizontale reliée à une portion de dôme (3), par une liaison arrondie concave (4), ladite portion de dôme (3) étant configurée pour permettre un accès (5) à l'intérieur de ladite portion de dôme (3) pour autoriser l'intervention sur un produit (P) disposé, directement ou indirectement, sur un plateau tournant (6) que comporte l'embase support (2), ledit plateau (6) étant entraîné en rotation par des moyens moteurs (7) localisés dans l'embase support (2), cette dernière comportant, également, au moins des moyens de solidarisation (21), de manière réversible, d'un bras support (8) à ladite embase (2), ledit bras support (8) étant muni, au niveau d'une première extrémité (81), de moyens de solidarisation (82) complémentaires auxdits moyens de solidarisation (21) que comporte ladite embase (2), ledit bras support (8) comportant par ailleurs, au niveau de son extrémité opposée (83) à ladite première extrémité (81) munie desdits moyens de solidarisation (82), soit un logement (87) pour la réception d'un dispositif de prise de vues (9), soit un dispositif de prise de vues (9).

2. Dispositif de studio (1) vidéographique ou photographique miniaturisé et portable selon la revendication 1 **caractérisé en ce qu'**il est connecté, ledit dispositif de prise de vue (9) étant intégré au bras support (8) et comportant une caméra connectée, associée à des moyens de contrôle et/ou de commande de celle-ci, comprenant un écran de contrôle pour le déclenchement de la prise de vues, ainsi que des moyens de type application web permettant un montage automatique et un partage instantané, des vidéos.

3. Dispositif de studio (1) vidéographique ou photographique miniaturisé et portable selon la revendication 1 ou la revendication 2 **caractérisé en ce que** ladite portion de dôme (3) comporte des échancrures latérales (31, 32) en sorte de permettre un accès latéral audit produit (P).

4. Dispositif de studio (1) vidéographique ou photographique miniaturisé et portable selon l'une quelconque des revendications précédentes **caractérisé en ce que** lesdits moyens moteurs (7) sont associés à des moyens de commande et de limitation de la vitesse de rotation dudit plateau tournant (6), à une vitesse de rotation comprise entre 3 et 4 tr/min, de préférence égale à 3 tr/min.

5. Dispositif de studio (1) vidéographique ou photographique miniaturisé et portable selon l'une quelconque des revendications précédentes **caractérisé en ce qu'**il comporte encore, au moins, deux sources lumineuses (12).

6. Dispositif de studio (1) vidéographique ou photographique miniaturisé et portable selon la revendication précédente **caractérisé en ce que** lesdites sources lumineuses (12) sont positionnées au niveau de la paroi interne (33) de la portion de dôme (3).

7. Dispositif de studio (1) vidéographique ou photographique miniaturisé et portable selon la revendication 5 ou la revendication 6 **caractérisé en ce que** lesdites sources lumineuse (12) présentent une température comprise entre 4300 et 4800 K.

8. Dispositif de studio (1) vidéographique ou photographique miniaturisé et portable selon l'une quelconque des revendications précédentes **caractérisé en ce que** la première extrémité (81) du bras support (8) consiste en un embout de connexion (84) de forme complémentaire à au moins une encoche que comporte l'embase support (2), ledit embout de connexion (84) étant muni de moyens magnétiques, sous la forme d'aimants (85, 86), attirant magnétiquement des moyens magnétiques complémentaires que comporte l'embase support (2), sous la forme d'aimants ou sous la forme d'un élément métallique.

9. Dispositif de studio (1) vidéographique ou photographique miniaturisé et portable selon l'une quelconque des revendications précédentes **caractérisé en ce que** ledit bras support (8) comporte des moyens de réglages en hauteur et/ou en inclinaison du positionnement du logement (87) recevant le dispositif de prise de vues (9) ou du positionnement du dispositif de prise de vues (9), et/ou des moyens de passage dudit bras support (8) du dispositif de prise de vues (9) entre au moins une première position et au moins une deuxième position.
